# EUROPEAN PATENT SPECIFICATION

(11) **EP 0 620 382 B1**
(45) Date of publication and mention of the grant of the patent: **29.01.1997**
(21) Application number: 93118982.3
(22) Date of filing: 25.11.1993
(51) Int. Cl.: F16G 13/16, H02G 11/00

(54) **A quick assemblable chain link for a cable-holding chain**
Schnellbindendes Kettenglied für eine kabeltragende Kette
Maillon de chaîne à assemblage rapide pour chaîne porteuse de cables

(30) Priority: 18.02.1993 IT MI930138 U
(43) Date of publication of application: 19.10.1994
(73) Proprietor: ELEKTROPOL CANTONI S.A.S. DI GIAMPIERO CANTONI & C., I-20122 Milano (IT)
(72) Inventor: Luppi, Davide, c/o Elektropol Cantoni S.A.S. di, I-20122 Milano (IT)
(74) Representative: La Ciura, Salvatore

(56) References cited:
- EP-A- 0 277 389
- DE-A- 2 310 144
- DE-A- 3 806 400
- DE-B- 1 126 202
- FR-A- 2 052 270
- FR-A- 2 583 852
- GB-A- 1 194 161
- US-A- 4 590 961

## Description

This invention is relating to a quick assemblable chain link for a cable holding chain comprising, on the one hand, a pair of wings having pins provided thereon and, on the other hand, corresponding wings in which there are formed holes adapted to receive the pins of an adjoining chain link, wherein said pins have a blind hole for receiving a finishing element, which is fitted for appearance purposes.

There are a number of cases where it is necessary that a bundle of cables should be enclosed in a protective structure which has to enable, however, a certain mobility thereof.

A typical case is, for example, a machine tool in which very frequently a tool with associate operating devices is mounted to a movable tool holder.

It is in this case necessary to provide means capable of ensuring continuity in power supply to a motor driving the tool, as well as the supply of lubricant, cooling fluid, air, etc., to a tool, for any working position to which that tool is moved.

Electrical cables and/or tubes supplying a tool, which are connected, on the one hand, to a fixed intake means on a machine structure and, on the other hand, to a movable tool holder, must be protected and guided in their movement to prevent them from being damaged by getting caught on parts of a machine.

To this end, a bundle of cables and/or tubes are usually passed inside a chain that is formed by joining together a number of chain links having a rigid structure, the chain providing protection to the cables while permitting the cables to have a required freedom of movement therein.

These cable-holding chains are frequently made of a plastic material both in view of economical advantages, in particular, the possibility of producing the chain links by molding and/or injection processes, and for many practical reasons such as the low noise and light weight properties of this type of material.

Chain links are known whose structure comprises pairs of wings at two opposite ends thereof, i.e. a first pair of wings provided with protruding pins of uniform hights and a second pair of wings formed with holes adapted to receive said pins.

However, this solution requires that one pair of wings be considerably expanded in order to be able to insert the pins into the respective holes which implies a great effort when large size chains are used.

Also known are chains in which the chain links are connected together by means of separate pins which are snap-fitted into corresponding holes after the chain links have been properly positioned.

This mode implies a toilsome work during assembly which makes chain assembly on a machine extremely complicated and moreover the obtained chains are difficult to open, the operator being obliged to use a tool in order to remove pins and disconnect a pair of chain links.

DE-A-2310144 and FR-A-2052270 disclose a quickly assemblable chain link for cable-holding chains of the type comprising a chain link structure provided at its ends with respective male and female wings shaped so as to form means for connecting each chain link with an adjoining chain link said male wings being provided with respective pins having an inclined surface the female wings having holes formed therein for engaging on corresponding pins of an adjoining chain link, said holes including respective beveled portions having inclined bottom surfaces, in order to facilitate elastic deformation of wings for snap-fitting of pins on a wing into holes of an adjoining wing.

These features correspond to the pre-characterizing part of claim 1.

It is in this latter context that the present invention has been conceived to provide a quick assemblable chain link for a cable-holding chain in accordance with the characterizing part of the appended claims.

The invention will now be described in more details in the following with particular reference to the accompanying drawings, in which:

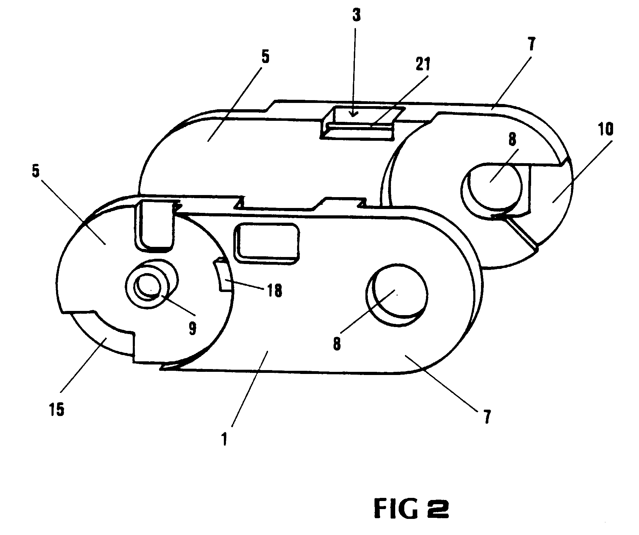

Figures 1 and 2 are perspective views of a chain link according to the invention as seen from opposite sides;

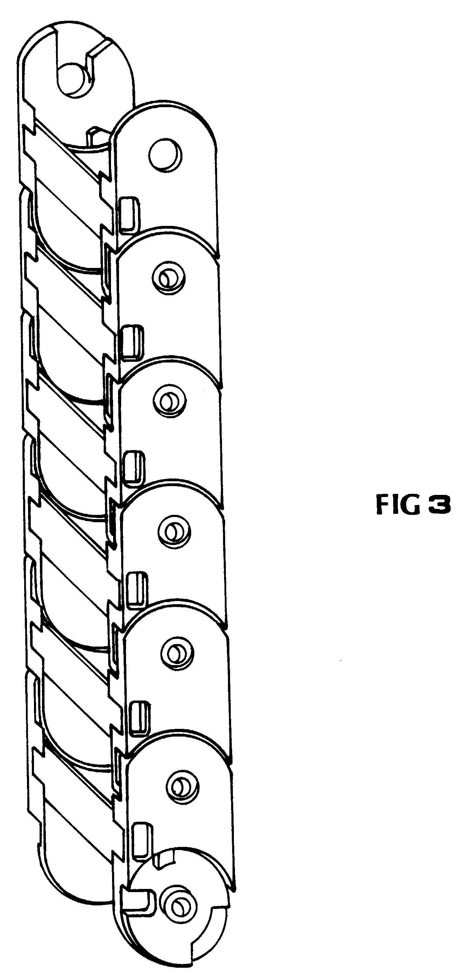

Figure 3 shows a chain using chain links according to the invention.

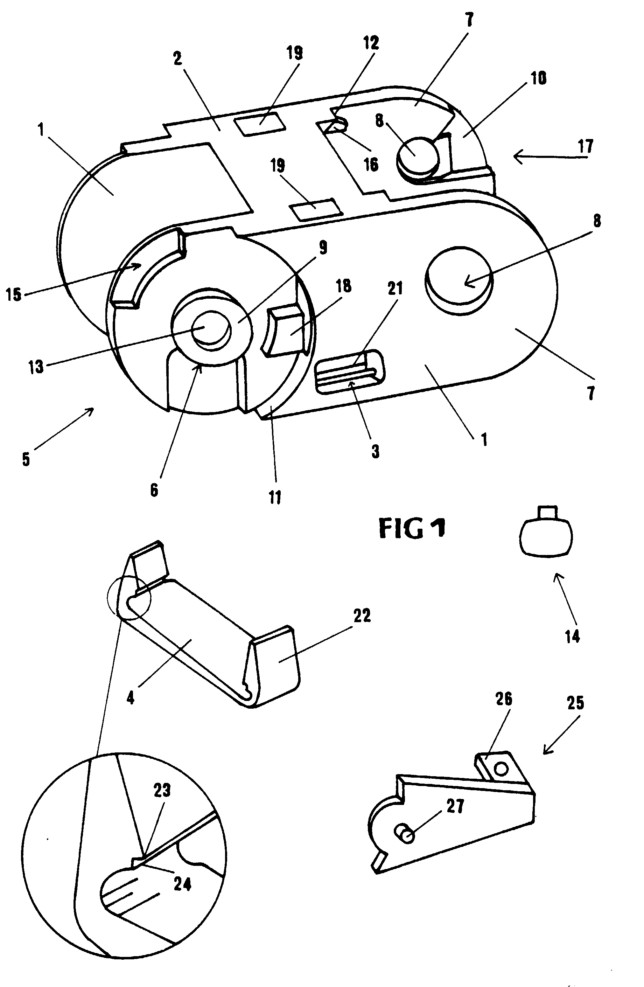

Referring to figure 1, a chain link according to the invention comprises two side walls 1 connected by a fixed, preferably ribbed stud 2 and having recesses 3 formed on an opposite side thereof for receiving a bent strap 4 to close the fourth,side of the structure so that the cables passed inside the chain are prevented from getting out of it.

The ends of walls 1 define respective "male-shaped" and "female-shaped" wings to permit a chain link to be coupled to an adjoining chain link to form a chain.

To this end, the walls 1 are made thinner at one end on the outer side, and at the other end on the innner side, so that when the chain links are joined together the walls of the resulting chain will be uniform in thickness at both the middle solid portion and the joining portion thereof.

In the drawing, reference numeral 5 broadly designates a male wing which is provided with protruding pin 6, and reference numeral 7 a female wing in which a hole 8 is formed for receiving pin 6.

Pins 6 are preferably integral with wings 5. According to a particular feature of the invention, pins 6 have an inclined surface 9 with the highmost portion being disposed towards the inside of the chain link, and the female portion has a lead-in zone thereon that is obtained by giving a corresponding inclination to a portion 10 of the inside wall of wing 7.

Wings 5 and 7 are rounded off as are the edges 11 and 12 defining the zones of walls 1 which are different in thickness.

Thus, when the chain has been assembled, the edges of wings 5 will slide in contact with complementarily shaped edges 12 of wings 7 while these latter will slide in contact with edges 11 of wings 5.

Due to this configuration, the compressive stresses on the chain are applied on the edges 11 and 12 of chain links while the tensile stresses are applied on the highmost portion of pins 9.

The maximum height of pins 9 is in any way such that a pin does not protrude from wing 8 when a chain has been assembled.

Moreover, pins 9 are provided with an axial hole 13 for receiving, if desired, a finishing element such as a stopper or the like, of the type as shown at 14, which is made, for example, of a material different in colour and which is fitted for appearance purposes.

Wing 5 has a beveled portion 15 formed therein within which a raised tooth-shaped portion 16 on wing 7 is received.

In a like manner, this wing 7 has a beveled portion 17 formed on it which may advantageously merge into leadin zone 10 having an inclined bottom wall, which beveled portion 17 will receive a tooth-shaped projection 18 on wing 5.

The sidewalls of beveled portions 15 and 17 function as stop means which will limit the amount of rotation of chain links with respect to one another by engagement of said sidewalls with said teeth 16 and 18.

Walls 1 have through holes 19 formed on their middle portion. These through holes 19, in addition to serve as lightening holes, provide access for passage of an injector used to obtain, in a manner integral with the chain link body, the formation of pins 21 which are provided for engagement by teeth on wings 22 of strap 4 when this latter is fitted to a chain link.
The strap wings 22, which have tapered tips, are connected to strap 4 through portions 29 of reduced thickness in order to facilitate elastic deformation and, thus, engagement on pins 21 of said wings.

Formed on the inner side of wings 22 are a pair of consecutive teeth 23 and 24 (see detail, Figure 1) Tooth 23 serves as a support means to facilitate introduction and opening of wings 22, and the second tooth 24 acts to lock the wings 22 on pins 21.

Upon engagement, opening of wings 22 is facilitated by side slots 3 formed on walls 1.

A chain may be completed at its ends by fitting means thereto, such as the element broadly shown at 25, figure 1, for connection to a machine.

These elements comprise each a wing 26 formed with a hole to permit passage of a bolt for connection with a machine, and a pin 27 adapted to be received in a corresponding hole formed in the end chain link of a chain.

From the above descriptiont the several advantages in terms of practical use of a chain link according to this invention will readily be apparent.

Thanks to this particular configuration of parts, a chain is in fact extremely simple to assemble, it being sufficient in order to connect the several chain links, to bring the pins on a chain link into register with the corresponding recesses on an adjoining chain link and then to press down until the pins will snappingly fit into respective recesses.

By this feature, assembling a chain on a machine can be extremely easy to perform without any recourse to complicated equipment.

Moreover, the chain itself is very simple to disassemble, a little twist force being sufficient to open the chain.

As a matter of fact, the sizes as well the used materials may vary depending on particular application requirements.

## Claims

1. A quickly assemblable chain link for cable-holding chains of the type comprising a chain link structure provided at its ends with respective male (5) and female (7) wings shaped so as to form means for connecting each chain link with an adjoining chain link, said male wings, (5) being provided with respective pins (6) having an inclined surface (9), the female wings (7) having holes (8) formed therein for engaging on corresponding pins of an adjoining chain link, said holes including respective beveled portions (10) having inclined bottom surfaces, in order to faciliate elastic deformation of wings for snap-fitting of pins on a wing into holes of an adjoining wing, characterized in that said pins are formed with a blind hole for receiving a finishing element therein, which is fitted for appearance purposes.

2. The chain link according to claim 1, wherein the wall of the chain link is reduced in thickness at an end portion thereof so that after the chain links have been assembled together the chain obtained therefrom will show a wall of constant thickness.

3. The chain link according to any preceding claim 1, wherein a recess (15,17) is provided in each said wing (5,7) and this recess is to receive a correponding tooth (16,18) on the wing of an adjoining chain link, engagement of said tooth against the end walls of said recess causing rotation of the chain links with respect to one another to be restrained.

4. The The chain link according to any preceding claims, wherein the chain link has one side open, a strap (4) being provided whose bent-over ends (22) are adaptetd to fit in corresponding recesses (3) of the chain link walls so as to close said one open side after cables have been introduced.

5. The chain link according to claim 4, wherein the bent-over ends (22) of said strap (4) include teeth (23,24) which are adapted to interengage with corresponding pins (21) formed in respective recesses in the chain link walls.

6. The chain link according to claims 4-5, wherein said strap ends include each two teeth (23,24) a first tooth acting to facilitate opening of said strap, the second tooth acting to lock said strap in place by interengagement with said pins.

7. The The chain link according to any preceding claim, wherein it is obtained by injection of a thermoplastic material.

8. A cable-holding chain using chain links according to anyone of the preceding claims.

## Patentansprüche

1. Schnell zusammensetzbares Kettenglied für kabeltragende Ketten einer Art, die aus Kettengliedern zusammengesetzt ist, die an ihren Enden jeweils mit männlichen Flügeln (5) und weiblichen Flügeln (7) versehen sind, die so geformt sind, daß sie Mittel zur Verbindung jedes Kettenglieds mit einem anschließenden Kettenglied bilden, von denen die männlichen Flügel (5) jeweils mit Stiften (6) versehen sind, die eine schräge Stirnfläche (9) haben, und in den weiblichen Flügeln (7) Bohrungen (8) zum Angriff an den entsprechenden Stiften eines anschließenden Kettenglieds gebildet sind, wobei diese Bohrungen jeweilige abgeschrägte Abschnitte (10) mit geneigten Oberflächen enthalten, um eine elastische Verformung der Flügel beim Einschnappen der Stifte an einem Flügel in die Bohrungen eines anschließenden Flügels zu erleichtern,
dadurch gekennzeichnet, daß die Stifte eine Blindbohrung zur Aufnahme eines Abdeckglieds darin aufweisen, welches zum Zwecke des Erscheinungsbildes eingepaßt wird.

2. Kettenglied nach Anspruch 1, bei dem die Wandstärke des Kettenglieds an seinem einen Endabschnitt so verringert ist, daß, nachdem die Kettenglieder zusammengefügt wurden, die daraus entstandene Kette eine Wand konstanter Dicke aufweist.

3. Kettenglied nach einem der vorangehenden Ansprüche, bei dem in jedem Flügel (5,7) eine Ausnehmung (15,17) gebildet ist, die zur Aufnahme eines korrespondierenden Zahns (16, 18) an den Flügel eines anschließenden Kettenglieds dient, wobei das Angreifen des Zahns an den Hinterenden der Ausnehmung die gegenseitige Verdrehung der Kettenglieder begrenzt.

4. Kettenglied nach einem der vorangehenden Ansprüche, das an einer Seite offen ist, wobei eine Lasche (4) mit abgebogenen Enden (22) vorgesehen ist, die in entsprechende Ausschnitte (3) der Kettengliedwände passen, um deren offene Seite nach dem Einlegen von Kabeln zu schließen.

5. Kettenglied nach Anspruch 4, bei dem die abgebogenen Enden (22) der Lasche (4) Zähne (23,24) enthalten, die dazu eingerichtet sind, in einen gegenseitigen Eingriff mit entsprechenden Stiften (21) zu kommen, die in jeweiligen Ausschnitten in den Kettengliedwänden gebildet sind.

6. Kettenglied nach den Ansprüchen 4 bis 5, bei dem die Laschenenden zwei Zähne (23, 24) enthalten, von denen ein erster Zahn ein Öffnen der Lasche erleichtert und der zweite Zahn die Lasche in ihrem eingesetzten Zustand durch den gegenseitigen Eingriff mit den Stiften verriegelt.

7. Kettenglied nach einem der vorangehenden Ansprüche, das durch Spritzguß eines thermoplastischen Materials erhalten wird.

8. Kabeltragende Kette, die Kettenglieder nach einem der vorangehenden Ansprüche verwendet.

## Revendications

1. Maillon de chaîne à assemblage rapide pour des chaînes porteuses de câbles du type comprenant une structure de maillon de chaîne pourvue à ses extrémités d'ailes respectivement mâles (5) et femelles (7) façonnées pour former des moyens destinés à relier chaque maillon de chaîne à un maillon de chaîne adjacent, les ailes mâles (5) étant pourvues d'ergots respectifs (6) présentant une surface inclinée (9), les ailes femelles (7) présentant des trous (8) façonnés pour s'engager sur des ergots correspondants d'un maillon de chaîne adjacent, les trous comportant des parties chanfreinées (10) respectives qui présentent des surfaces de fond inclinées en vue de faciliter une déformation élastique des ailes pour un encliquetage d'ergots d'une aile dans des trous d'une aile adjacente, caractérisé en ce que les ergots sont formés avec un trou borgne pour recevoir dedans un élément de finition qui est monté dans des buts d'apparence.

2. Maillon de chaîne suivant la revendication 1, caractérisé en ce que la paroi du maillon de chaîne est réduite en épaisseur à une de ses parties d'extrémité de façon que, après que les maillons de chaîne ont été assemblés, la chaîne obtenue ainsi montre une paroi d'une épaisseur constante.

3. Maillon de chaîne suivant l'une quelconque des revendications précédentes, caractérisé en ce qu'un évidement (15, 17) est prévu dans chacune des ailes (5, 7) et en ce que cet évidement est destiné à recevoir une dent correspondante (16, 18) de l'aile d'un maillon de chaîne adjacent, une entrée en prise de la dent contre les parois d'extrémité de l'évidement provoquant une limitation de la rotation des maillons de chaîne l'un par rapport à l'autre.

4. Maillon de chaîne suivant l'une quelconque des revendications précédentes, caractérisé en ce que le maillon de chaîne présente un côté ouvert, une attache (4) étant prévue dont les extrémités recourbées (22) sont adaptées pour s'ajuster dans des évidements correspondants (3) des parois du maillon de chaîne de façon à fermer ledit côté ouvert après que des câbles ont été introduits.

5. Maillon de chaîne suivant la revendication 4, caractérisé en ce que les extrémité recourbées (22) de l'attache (4) comprennent des dents (23, 24) qui sont adaptées pour coopérer avec des tenons correspondants (21) façonnés dans des évidements respectifs des parois du maillon de chaîne.

6. Maillon de chaîne suivant l'une des revendications 4 et 5, caractérisé en ce que les extrémité de l'attache comportent chacune deux dents (23, 24), une première dent agissant pour faciliter une ouverture de l'attache, la deuxième dent agissant pour bloquer l'attache en place par coopération avec lesdits tenons.

7. Maillon de chaîne suivant l'une quelconque des revendications précédentes, caractérisé en ce qu'il est obtenu par injection d'une matière thermoplastique.

8. Chaîne porteuse de câbles utilisant des maillons de chaîne suivant l'une quelconque des revendications précédentes.
